# EUROPEAN PATENT SPECIFICATION

(11) **EP 2 958 298 B1**
(45) Date of publication and mention of the grant of the patent: **23.09.2020**
(21) Application number: 13880910.8
(22) Date of filing: 02.04.2013
(51) Int. Cl.: H04L 29/06

(54) **FILE UPLOADING METHOD IN CLOUD STORAGE, CLIENT, APPLICATION SERVER, AND CLOUD STORAGE SYSTEM**
VERFAHREN ZUM HOCHLADEN VON DATEIEN IN EINER CLOUDSPEICHERUNG, CLIENT, ANWENDUNGSSERVER UND CLOUDSPEICHERSYSTEM
PROCÉDÉ DE TÉLÉVERSEMENT DE FICHIER SUR UN STOCKAGE EN NUAGE, CLIENT, SERVEUR D'APPLICATION ET SYSTÈME DE STOCKAGE EN NUAGE

(43) Date of publication of application: 23.12.2015
(73) Proprietor: Huawei Technologies Co., Ltd., Longgang District Shenzhen, Guangdong 518129 (CN)
(72) Inventor: XU, Kaifu, Shenzhen Guangdong 518129 (CN)
(74) Representative: Epping - Hermann - Fischer
(86) International application number: PCT/CN2013/073662
(87) International publication number: WO 2014/161157

(56) References cited:
- WO-A1-2005/041534
- CN-A- 1 996 843
- CN-A- 101 552 669
- CN-A- 102 546 836
- US-A1- 2011 087 690
- US-A1- 2011 246 294
- US-A1- 2013 073 691

## Description

### TECHNICAL FIELD

The present invention relates to the field of cloud storage technologies, and in particular, to a file uploading method in cloud storage, and also relates to a client and an application server in cloud storage, and a cloud storage system.

### BACKGROUND

US 2011/0087690 A1 relates to a computer implemented method for storing files on a cloud-based server. The method comprises receiving, at a server, a request from a user to store a file; receiving, at the server, from a client computer controlled by the user, a hash value for the file; determining, through at least one processor of the server, whether a file with a hash value identical to the received hash value is already stored on the server; and if a file with a hash value identical to the received hash value is not already stored on the server, sending to the client computer a request to send the file to the server.

US 2013/0073691 A1 relates to one or more computer-readable media storing computer-executable instructions that, when executed by one or more processors, instruct the one or more processors to perform acts. These acts comprise receiving, by a server, an upload request to upload a file from a user device; generating a file identifier (ID) for the file based on the upload request; transmitting the file ID to the user device; receiving a slice file package from the user device, the slice file package including multiple slice files associated with the file and slice IDs associated with the multiple slice files; and storing the slice file package such that the file ID is associated with the slice IDs.

Cloud storage refers to a system in which a function, such as a cluster application, a grid technology, or a distributed file system, is used to integrate a large quantity of various storage devices on a network by using application software to work collaboratively and provide data storage and service access functions externally. The cloud storage includes an application server and a file server. The application server is usually configured to store feature data of a file, and the file server is usually configured to store a file, where the feature data may be used to check validity of a file, and is in a one-to-one correspondence with the file.

According to different services borne on the cloud storage, different limitations and constraints need to be set on a file uploaded to the cloud storage, and these limitations and constraints may include a size and a type of the file, user upload permission, and the like. All these limitations and constraints are established by checking feature data of the file, to identify permission of a user and validity of the file.

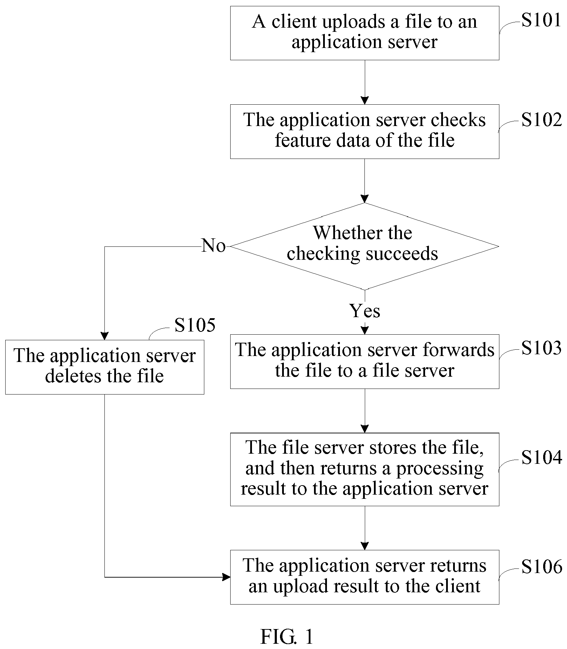

Referring to FIG. 1, FIG. 1 is a schematic diagram of a process of uploading a file to cloud storage in the prior art. The process includes the following steps: S101: A client uploads a file to an application server. S102: The application server checks feature data of the file. S103: If the checking succeeds, the application server forwards the file to a file server. S104: The file server stores the file, and then returns a processing result to the application server. S105: If the checking fails, the application server deletes the file. S106: The application server returns an upload result to the client.

Because the client is orientated to the application server, and related data of the file is forwarded by the application server, the file is transmitted on a network for multiple times. In addition, the client needs to finish uploading the entire file, so as to obtain a checking result, and if the checking fails, the file needs to be deleted. Therefore, not only traffic is wasted, but also processing time is increased.

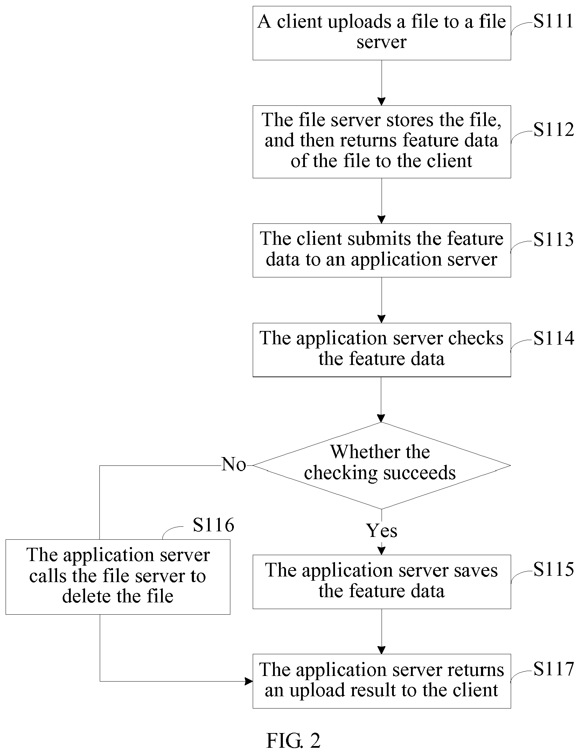

Referring to FIG. 2, FIG. 2 is another schematic flowchart of uploading a file to cloud storage in the prior art. The process includes the following steps: Sill: A client uploads a file to a file server. S112: The file server stores the file, and then returns feature data of the file to the client. S113: The client submits the feature data to an application server. S114: The application server checks the feature data. S115: If the checking succeeds, the application server saves the feature data. S116: If the checking fails, the application server calls the file server to delete the file. S117: The application server returns an upload result to the client.

A difference from the former uploading manner lies in that, the client is orientated to the file server. However, although the file uploaded by the client may be directly stored in the file server without being forwarded by the application server, the client still needs to finish uploading the entire file, so as to obtain a checking result, and if the checking fails, the file still needs to be deleted. Therefore, the uploading manner also causes a waste of traffic. In addition, if in step S113, the client does not submit the feature data because of a reason, a large quantity of redundant files are generated on the file server, resulting in a waste of storage space. These redundant files need to be cleared by using another means, which is relatively troublesome. It is well known that, space of the cloud storage is very valuable, and the industry tries hard to avoid a phenomenon of space waste.

### SUMMARY

The present invention defines a method according to claim 1 and a client according to claim 6. Further embodiments are set forth in the dependent claims 2-5 and 7-10.

In view of this, the present invention provides a file uploading method, a client, and an application server in cloud storage, and a cloud storage system, to solve a problem in the prior art that an application server cannot perform checking before a client uploads a file.

To solve the foregoing problem, a first aspect of the present application provides a file uploading method in cloud storage, including: extracting an eigenvalue of a target file to be uploaded; submitting an upload request including the eigenvalue to an application server, so that the application server determines, according to the upload request, whether a client needs to upload the target file; receiving an execution instruction that is sent, according to a determining result, by the application server; and if the execution instruction is an upload instruction, uploading the target file to a file server according to the upload instruction, wherein the eigenvalue includes one or more of a size, a type, and a name of the target file for the application server to determine whether the target file meets user upload permission, or preliminarily determine whether the target file is the same as an existing file that has been saved by the file server.

With reference to the first aspect, in a first possible implementation manner, the eigenvalue further includes an initial check value of the target file for the application server to preliminarily determine whether the target file is the same as the existing file that has been saved by the file server.

With reference to the first aspect, in a second possible implementation manner, the file uploading method further includes: if the execution instruction is an end instruction, terminating, according to the end instruction, uploading the target file.

With reference to the first aspect or the first possible implementation manner of the first aspect, in a third possible implementation manner, the file uploading method further includes: if the execution instruction is a verification instruction, calculating a verification check value of the target file according to the verification instruction; and submitting the verification check value to the file server, so that the file server finally determines, according to the verification check value, whether the target file is the same as the existing file that has been saved by the file server, and feeds back a final determining result to the application server.

With reference to the third possible implementation manner of the first aspect, in a fourth possible implementation manner, the initial check value and the verification check value are separately an MD5 value or an SHA1 value corresponding to different byte ranges of the target file.

With reference to the third possible implementation manner of the first aspect, in a fifth possible implementation manner, the file uploading method further includes: if a sharing instruction is further received from the application server, sharing the existing file, and terminating uploading the target file.

With reference to the third possible implementation manner of the first aspect, in a sixth possible implementation manner, the file uploading method further includes: if the upload instruction is further received from the application server, uploading the target file to the file server according to the upload instruction.

With reference to the first aspect, in a seventh possible implementation manner, the step of uploading the target file to a file server according to the upload instruction specifically includes: dividing the target file into several entities according to the upload instruction, and successively uploading each entity to the file server, where when each entity is uploaded, a latter entity is uploaded sequentially by starting from a former entity that has been uploaded, until all the entities are uploaded.

To solve the foregoing problem, a second aspect of the present application provides a file uploading method in cloud storage, including: receiving an upload request submitted by a client, where the upload request includes an eigenvalue of a target file to be uploaded by the client; determining, according to the upload request, whether the client needs to upload the target file; and if the client needs to upload the target file, sending an upload instruction to the client, so that the client uploads the target file to a file server according to the upload instruction.

With reference to the second aspect, in a first possible implementation manner, the eigenvalue includes one or more of a size, a type, and a name of the target file, and the step of determining, according to the upload request, whether the client needs to upload the target file specifically includes: determining, according to the eigenvalue, whether the target file meets user upload permission; and if the user upload permission is met, determining that the client needs to upload the target file.

With reference to the first possible implementation manner of the second aspect, in a second possible implementation manner, the file uploading method further includes: after it is determined that the user upload permission is met, preliminarily determining, in the file server according to the eigenvalue, whether the target file is the same as an existing file that has been saved by the file server; and if a preliminary determining result is that the target file is not the same as the existing file that has been saved by the file server, determining that the client needs to upload the target file.

With reference to the second possible implementation manner of the second aspect, in a third possible implementation manner, the eigenvalue further includes an initial check value of the target file, and the step of preliminarily determining, in the file server according to the eigenvalue, whether the target file is the same as an existing file that has been saved by the file server specifically includes: preliminarily determining, in the file server according to the one or more of the size, the type, and the name of the target file, and the initial check value, whether the target file is the same as the existing file that has been saved by the file server.

With reference to the second possible implementation manner of the second aspect, in a fourth possible implementation manner, the file uploading method further includes: if the user upload permission is not met, determining that the client does not need to upload the target file, and sending an end instruction to the client, so that the client terminates, according to the end instruction, uploading the target file.

With reference to the fourth possible implementation manner of the second aspect, in a fifth possible implementation manner, the file uploading method further includes: if the preliminary determining result is that the target file is the same as the existing file that has been saved by the file server, sending a verification instruction to the client, so that the client calculates a verification check value of the target file according to the verification instruction, and the file server finally determines, according to the verification check value, whether the target file is the same as the existing file.

With reference to the fifth possible implementation manner of the second aspect, in a sixth possible implementation manner, the file uploading method further includes: sending a sharing instruction to the client according to a final determining result, fed back by the file server, that the target file is the same as the existing file, so that the client shares the existing file according to the sharing instruction, and terminates uploading the target file.

With reference to the fifth possible implementation manner of the second aspect, in a seventh possible implementation manner, the file uploading method further includes: sending the upload instruction to the client according to a final determining result, fed back by the file server, that the target file is not the same as the existing file.

With reference to the sixth possible implementation manner or the seventh possible implementation manner of the second aspect, in an eighth possible implementation manner, if the user upload permission is met, before the step of preliminarily determining, in the file server according to the eigenvalue, whether the target file is the same as an existing file that has been saved by the file server, the file uploading method further includes: pre-processing the upload request.

With reference to the eighth possible implementation manner of the second aspect, in a ninth possible implementation manner, an operation of the pre-processing includes: excluding user storage space in advance according to the size of the target file, and adding a pre-processing identifier to the eigenvalue.

With reference to the ninth possible implementation manner of the second aspect, in a tenth possible implementation manner, the file uploading method further includes: after the end instruction is sent to the client or after a prompt, returned by the file server, that the target file is uploaded unsuccessfully is further received, restoring the user storage space according to the size of the target file, and deleting the eigenvalue.

With reference to the tenth possible implementation manner of the second aspect, in an eleventh possible implementation manner, the file uploading method further includes: after the sharing instruction is sent to the client or a prompt, returned by the file server, that the target file is uploaded successfully is further received, changing the pre-processing identifier to a post-processing identifier.

With reference to the eleventh possible implementation manner of the second aspect, in a twelfth possible implementation manner, if the eigenvalue is not deleted or the pre-processing identifier is not changed to the post-processing identifier within a predetermined time limit, the step of restoring the user storage space according to the size of the target file, and deleting the eigenvalue is executed.

To solve the foregoing problem, a third aspect of the present application provides a client in cloud storage, including a file calculating unit, a file uploading unit, and an instruction receiving unit, where the file calculating unit is configured to extract an eigenvalue of a target file to be uploaded, and transmit the eigenvalue to the file uploading unit; the file uploading unit is configured to acquire the eigenvalue from the file calculating unit, and submit an upload request including the eigenvalue to an application server, so that the application server determines, according to the upload request, whether the client needs to upload the target file; and the instruction receiving unit is configured to receive an execution instruction that is sent, according to a determining result, by the application server, and if the execution instruction is an upload instruction, transmit the upload instruction to the file uploading unit, where the file uploading unit is further configured to upload the target file to a file server according to the upload instruction, wherein the eigenvalue includes one or more of a size, a type, and a name of the target file for the application server to determine whether the target file meets user upload permission, or preliminarily determine whether the target file is the same as an existing file that has been saved by the file server.

With reference to the third aspect, in a first possible implementation manner, the eigenvalue further includes an initial check value of the target file for the application server to preliminarily determine whether the target file is the same as the existing file that has been saved by the file server.

With reference to the third aspect, in a second possible implementation manner, if the execution instruction is an end instruction, the instruction receiving unit transmits the end instruction to the file uploading unit, and the file uploading unit is further configured to terminate, according to the end instruction, uploading the target file.

With reference to the third aspect or the first possible implementation manner of the third aspect, in a third possible implementation manner, if the execution instruction is a verification instruction, the instruction receiving unit transmits the verification instruction to the file calculating unit, and the file calculating unit is further configured to calculate a verification check value of the target file according to the verification instruction, and transmit the verification check value to the file uploading unit; and the file uploading unit is further configured to acquire the verification check value from the file calculating unit, and submit the verification check value to the file server, so that the file server finally determines, according to the verification check value, whether the target file is the same as the existing file that has been saved by the file server, and feeds back a final determining result to the application server.

With reference to the third possible implementation manner of the third aspect, in a fourth possible implementation manner, the initial check value and the verification check value are separately an MD5 value or an SHA1 value corresponding to different byte ranges of the target file.

With reference to the third possible implementation manner of the third aspect, in a fifth possible implementation manner, if the instruction receiving unit further receives a sharing instruction from the application server, the instruction receiving unit further transmits the sharing instruction to the file uploading unit, and the file uploading unit is further configured to acquire the sharing instruction from the instruction receiving unit, share the existing file according to the sharing instruction, and terminate uploading the target file.

With reference to the third possible implementation manner of the third aspect, in a sixth possible implementation manner, if the instruction receiving unit further receives the upload instruction from the application server, the instruction receiving unit further transmits the upload instruction to the file uploading unit, and the file uploading unit is further configured to acquire the upload instruction from the instruction receiving unit, and upload the target file to the file server according to the upload instruction.

With reference to the third aspect, in a sixth possible implementation manner, the file uploading unit is specifically configured to divide the target file into several entities according to the upload instruction, and successively upload each entity to the file server, where when each entity is uploaded, a latter entity is uploaded sequentially by starting from a former entity that has been uploaded, until all the entities are uploaded.

To solve the foregoing problem, a fourth aspect of the present application provides an application server in cloud storage, including an application storage unit, an application detecting unit, and an application processing unit, where the application storage unit is configured to receive an upload request submitted by a client, and transmit the upload request to the application detecting unit, where the upload request includes an eigenvalue of a target file to be uploaded by the client; the application detecting unit is configured to acquire the upload request from the application storage unit, and determine, according to the upload request, whether the client needs to upload the target file; and the application processing unit is configured to receive a determining result, sent by the application detecting unit, that the client needs to upload the target file, and send an upload instruction to the client, so that the client uploads the target file to a file server according to the upload instruction.

With reference to the fourth aspect, in a first possible implementation manner, the eigenvalue includes one or more of a size, a type, and a name of the target file, and the application detecting unit includes a permission determining module and an executing module, where the permission determining module is configured to determine, according to the eigenvalue, whether the target file meets user upload permission; and the executing module is configured to: when a determining result of the permission determining module is yes, send, to the application processing unit, the determining result that the client needs to upload the target file.

With reference to the first possible implementation manner of the fourth aspect, in a second possible implementation manner, the application detecting unit further includes a preliminary determining module, and the preliminary determining module is configured to: when the determining result of the permission determining module is yes, further preliminarily determine, in the file server according to the eigenvalue, whether the target file is the same as an existing file that has been saved by the file server; and the executing module is configured to: when a determining result of the preliminary determining module is no, send, to the application processing unit, the determining result that the client needs to upload the target file.

With reference to the second possible implementation manner of the fourth aspect, in a third possible implementation manner, the eigenvalue further includes an initial check value of the target file, and the preliminary determining module is specifically configured to preliminarily determine, in the file server according to the one or more of the size, the type, and the name of the target file, and the initial check value, whether the target file is the same as the existing file that has been saved by the file server.

With reference to the second possible implementation manner of the fourth aspect, in a fourth possible implementation manner, the executing module is further configured to: when a determining result of the permission determining module is no, send, to the application processing unit, a determining result that the client does not need to upload the target file; and the application processing unit is further configured to receive the determining result, sent by the executing module, that the client does not need to upload the target file, and send an end instruction to the client, so that the client terminates, according to the end instruction, uploading the target file.

With reference to the fourth possible implementation manner of the fourth aspect, in a fifth possible implementation manner, the application processing unit is further configured to: when a determining result of the preliminary determining module is yes, send a verification instruction to the client, so that the client calculates a verification check value of the target file according to the verification instruction, and the file server finally determines, according to the verification check value, whether the target file is the same as the existing file.

With reference to the fifth possible implementation manner of the fourth aspect, in a sixth possible implementation manner, the application processing unit is further configured to send a sharing instruction to the client according to a final determining result, fed back by the file server, that the target file is the same as the existing file, so that the client shares the existing file according to the sharing instruction, and terminates uploading the target file.

With reference to the fifth possible implementation manner of the fourth aspect, in a seventh possible implementation manner, the application processing unit is further configured to send the upload instruction to the client according to a final determining result, fed back by the file server, that the target file is not the same as the existing file.

With reference to the sixth possible or the seventh possible implementation manner of the fourth aspect, in an eighth possible implementation manner, the application server further includes a pre-processing unit, and the pre-processing unit is configured to: when the permission determining module determines that the user upload permission is met, pre-process the upload request.

With reference to the eighth possible implementation manner of the fourth aspect, in a ninth possible implementation manner, an operation of the pre-processing includes: excluding user storage space in advance according to the size of the target file, and adding a pre-processing identifier to the eigenvalue.

With reference to the ninth possible implementation manner of the fourth aspect, in a tenth possible implementation manner, the pre-processing unit is specifically configured to: after the application processing unit sends the end instruction to the client or further receives a prompt, returned by the file server, that the target file is uploaded unsuccessfully, restore the user storage space according to the size of the target file, and delete the eigenvalue.

With reference to the tenth possible implementation manner of the fourth aspect, in an eleventh possible implementation manner, the pre-processing unit is specifically configured to: after the application processing unit sends the sharing instruction to the client or further receives a prompt, returned by the file server, that the target file is uploaded successfully, change the pre-processing identifier to a post-processing identifier.

With reference to the eleventh possible implementation manner of the fourth aspect, in a twelfth possible implementation manner, the pre-processing unit sets a predetermined time limit, and if the eigenvalue is not deleted or the pre-processing identifier is not changed to the post-processing identifier within the predetermined time limit, the pre-processing unit restores the user storage space according to the size of the target file and deletes the eigenvalue.

To solve the foregoing problem, a fifth aspect of the present application provides a cloud storage system, including any one of the foregoing clients and any one of the foregoing application servers.

According to the file uploading method, the client, and the application server in cloud storage, and the cloud storage system in the present application, an eigenvalue of a target file is extracted first, an upload request including the eigenvalue is submitted to the application server, and the client uploads the target file only when the application server determines, according to the upload request, that the client needs to upload the target file. Therefore, a problem in the prior art that an application server cannot perform checking before a client uploads a file is solved, and an uploading process is optimized, thereby avoiding a waste of traffic, reducing consumption of the application server, and improving uploading efficiency.

The foregoing description is merely a brief description of the technical solutions of the present invention. In order to understand the technical means of the present invention more clearly and implement the technical means according to the content of the specification, and to make the foregoing description and other objectives, features, and advantages of the present invention more comprehensible, a detailed description is provided in the following with reference to accompanying drawings and exemplary implementation manners.

### BRIEF DESCRIPTION OF DRAWINGS

FIG. 1 is a schematic flowchart of uploading a file to cloud storage in the prior art;
FIG. 2 is another schematic flowchart of uploading a file to cloud storage in the prior art;
FIG. 3 is a schematic flowchart of a file uploading method in cloud storage according to a first implementation manner of the present application;
FIG. 4 is a schematic flowchart of a file uploading method in cloud storage according to a second implementation manner of the present application;
FIG. 5 is a schematic flowchart of a file uploading method in cloud storage according to a third implementation manner of the present application;
FIG. 6 is a schematic flowchart of a file uploading method in cloud storage according to a fourth implementation manner of the present application;
FIG. 7 is a schematic flowchart of a file uploading method in cloud storage according to a fifth implementation manner of the present application;
FIG. 8 is a schematic flowchart of a file uploading method in cloud storage according to a sixth implementation manner of the present application;
FIG. 9 is a schematic flowchart of a file uploading method in cloud storage according to a seventh implementation manner of the present application;
FIG. 10 is a schematic structural diagram of a client in cloud storage according to an implementation manner of the present application; and
FIG. 11 is a schematic structural diagram of an application server in cloud storage according to an implementation manner of the present application.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

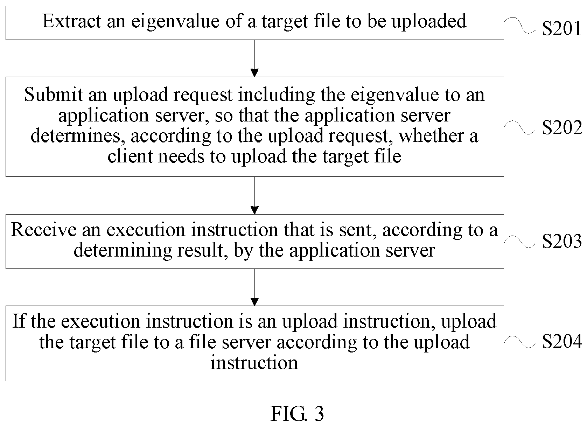

Referring to FIG. 3, FIG. 3 is a schematic flowchart of a file uploading method in cloud storage according to a first implementation manner of the present invention. The file uploading method in cloud storage includes the following steps:
Step S201: Extract an eigenvalue of a target file to be uploaded.

The target file has an eigenvalue, where the eigenvalue represents basic information of the target file, and the eigenvalue may be used to map the target file. If there are multiple target files, eigenvalues of all the target files may be the same or different.

Step S202: Submit an upload request including the eigenvalue to an application server, so that the application server determines, according to the upload request, whether a client needs to upload the target file.

In addition to the eigenvalue, the upload request may further include a storage path. If the application server needs to store the eigenvalue, the application server stores the eigenvalue in the storage path. In this implementation manner, the eigenvalue includes one or more of a size, a type, and a name of the target file for the application server to determine whether the target file meets user upload permission, or preliminarily determine whether the target file is the same as an existing file that has been saved by a file server. Specifically, determining whether the client needs to upload the target file includes determining whether the target file meets the user upload permission, or preliminarily determining whether the target file is the same as the existing file that has been saved by the file server. For the former one, it may be learned, by using at least one of the name, the size, and the type of the target file, whether the target file meets the user upload permission. Whether the user upload permission is met includes, for example, whether the type belongs to a type that is permitted to be uploaded, whether the size exceeds a permitted range and whether the size is larger than available storage space that is shared by a user, and whether the name meets a specification. For the latter one, the application server stores eigenvalues of many existing files, where each existing file is saved in the file server, and the existing files and the eigenvalues in the application server are mapped to each other. The existing file that is the same as the target file may be preliminarily discriminated by comparing the eigenvalue of the target file with the eigenvalues of the existing files.

Further, the eigenvalue further includes an initial check value of the target file for the application server to preliminarily determine whether the target file is the same as the existing file that has been saved by the file server. In this implementation manner, the initial check value is an MD5 value or an SHA1 value corresponding to a byte range of the target file. MD5 (Message Digest Algorithm 5, message digest algorithm 5) is a hash function that is widely used in the computer security field. MD5 uses a file as text information, and generates a unique MD5 value by using an irreversible string transform algorithm. If anyone makes any change to the file, the MD5 value of the file may be changed. SHA1 (Secure Hash Algorithm, secure hash algorithm) has an effect similar to that of MD5, and also generates a unique SHA1 value. Therefore, if a probability that sizes, types, or names of multiple different existing files are the same as the size, the type, or the name of the target file is relatively high, a probability that initial check values are the same is very low. Therefore, the initial check value may improve preliminary determining accuracy of the application server to a greater extent.

Step S203: Receive an execution instruction that is sent, according to a determining result, by the application server.

The determining result includes: it is determined that the client needs to upload the target file and it is determined that the client does not need to upload the target file.

Step S204: If the execution instruction is an upload instruction, upload the target file to a file server according to the upload instruction.

The execution instruction is the upload instruction, which indicates that the application server determines, according to the upload request, that the client needs to upload the target file. Considering that interruption may occur in a process of uploading the target file, in this implementation manner, the target file is divided into several entities according to the upload instruction, and each entity is successively uploaded to the file server, where when each entity is uploaded, a latter entity is uploaded sequentially by starting from a former entity that has been uploaded, until all the entities are uploaded. Byte ranges of all the entities may be different. Because the entire target file is divided into several entities for uploading, an upload speed may be ensured, and a situation that the entire target file needs to be re-uploaded in case of upload interruption may be avoided, thereby avoiding a waste of traffic, and improving uploading efficiency.

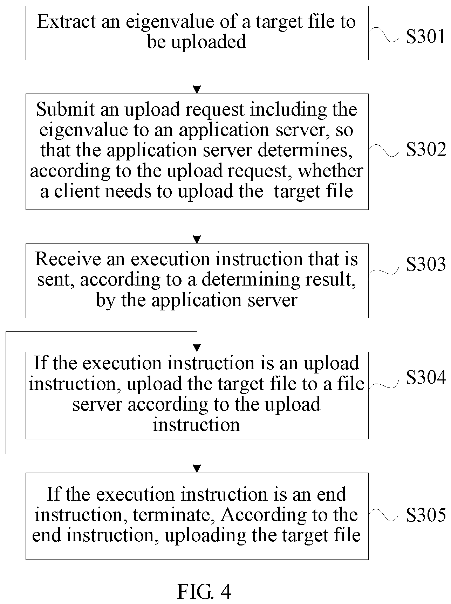

According to the file uploading method in cloud storage in this implementation manner, an upload request including an eigenvalue is submitted first, and a target file is uploaded only when it is determined, according to the upload request, that a client needs to upload the target file. Therefore, a problem in the prior art that an application server cannot perform checking before a client uploads a file is solved, and an uploading process is optimized, thereby avoiding a waste of traffic, reducing consumption of the application server, and improving uploading efficiency. In addition, when the target file is uploaded, the target file is divided into several entities for uploading, thereby further avoiding the waste of traffic, and improving the uploading efficiency. Referring to FIG. 4, FIG. 4 is a schematic flowchart of a file uploading method in cloud storage according to a second implementation manner of the present application. The file uploading method in cloud storage includes the following steps:
Step S301: Extract an eigenvalue of a target file to be uploaded.
Step S302: Submit an upload request including the eigenvalue to an application server, so that the application server determines, according to the upload request, whether a client needs to upload the target file.
Step S303: Receive an execution instruction that is sent, according to a determining result, by the application server.
Step S304: If the execution instruction is an upload instruction, upload the target file to a file server according to the upload instruction.

Refer to related steps of the first implementation manner for steps S301, S302, S303, and S304, which are in a scope that is easily understood by a person skilled in the art, and details are not described herein again.

Step S305: If the execution instruction is an end instruction, terminate, according to the end instruction, uploading the target file.

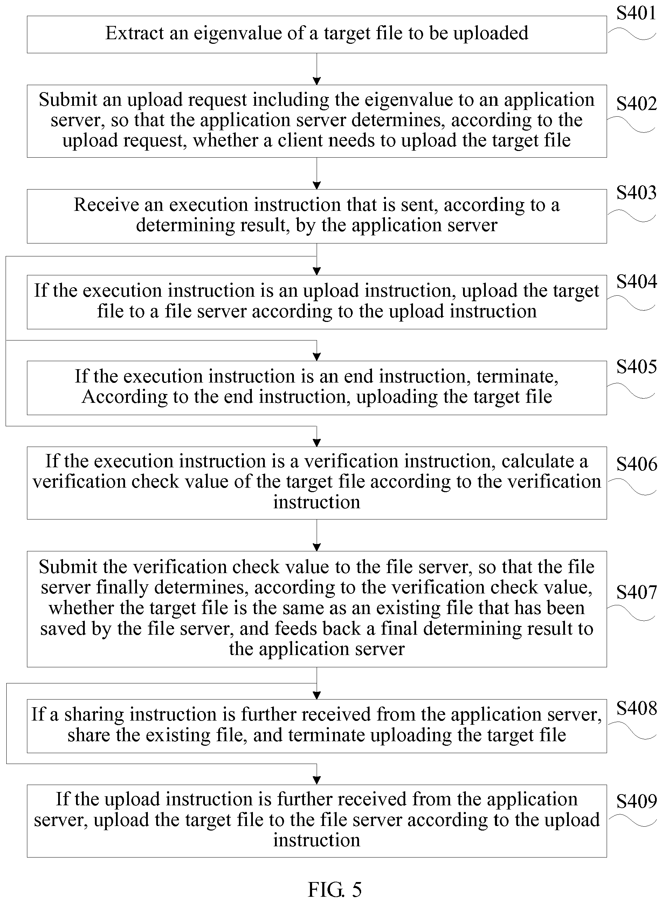

The execution instruction is the end instruction, which indicates that the application server determines, according to the upload request, that the client does not need to upload the target file. Referring to FIG. 5, FIG. 5 is a schematic flowchart of a file uploading method in cloud storage according to a third implementation manner of the present application. The file uploading method in cloud storage includes the following steps:
Step S401: Extract an eigenvalue of a target file to be uploaded.
Step S402: Submit an upload request including the eigenvalue to an application server, so that the application server determines, according to the upload request, whether a client needs to upload the target file.
Step S403: Receive an execution instruction that is sent, according to a determining result, by the application server.
Step S404: If the execution instruction is an upload instruction, upload the target file to a file server according to the upload instruction.
Step S405: If the execution instruction is an end instruction, terminate, according to the end instruction, uploading the target file.

Refer to related steps of the second implementation manner for steps S401, S402, S403, S404, and S405, which are in a scope that is easily understood by a person skilled in the art, and details are not described herein again.

Step S406: If the execution instruction is a verification instruction, calculate a verification check value of the target file according to the verification instruction.

As may be known from the foregoing description that, determining whether the client needs to upload the target file includes determining whether the target file meets user upload permission, or preliminarily determining whether the target file is the same as an existing file that has been saved by the file server. Herein, that the execution instruction is a verification instruction is obtained by preliminarily determining whether the target file is the same as the existing file that has been saved by the file server. The execution instruction is the verification instruction, which indicates that it is preliminarily determined that the target file is the same as the existing file.

In this implementation manner, the verification check value is the same as an initial check value, and is also an MD5 value or an SHA1 value corresponding to a byte range of the target file. However, the verification check value and the initial check value are an MD5 value or an SHA1 value corresponding to different byte ranges of the target file. Herein, the initial check value corresponds to a relatively small byte range of the target file, and the verification check value corresponds to all byte ranges of the target file.

Step S407: Submit the verification check value to the file server, so that the file server finally determines, according to the verification check value, whether the target file is the same as an existing file that has been saved by the file server, and feeds back a final determining result to the application server.

For a target file that does not really exist, an initial check value thereof corresponding to a relatively small byte range may be forged by using a technical means, so that the upload request is deceptive. If the forged initial check value is the same as a check value of the same byte range of the existing file, a user may achieve an objective of sharing the existing file without uploading a real target file. As a result, a great information security risk may be brought to cloud storage. Therefore, in this implementation manner, in a situation in which the initial check value is used to determine that the target file the same as the existing file, the verification check value is further determined, so that the foregoing situation may be avoided because it is difficult to forge the verification check value corresponding to all the byte ranges.

Step S408: If a sharing instruction is further received from the application server, share the existing file, and terminate uploading the target file.

The sharing instruction is received, which indicates that the final determining result is that the target file is the same as the existing file that has been saved by the file server, the existing file may be shared, and the step of uploading the target file is omitted.

Step S409: If the upload instruction is further received from the application server, upload the target file to the file server according to the upload instruction.

The upload instruction is received, which indicates that the final determining result is that the target file is not the same as the existing file that has been saved by the file server, and the target file still needs to be uploaded.

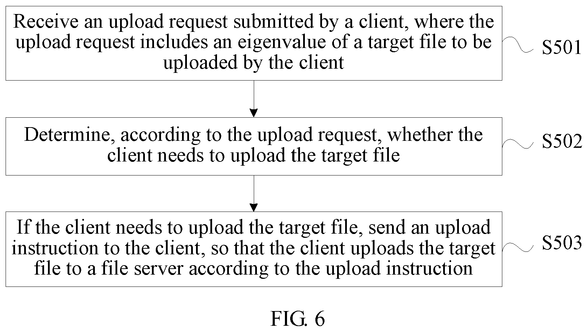

Referring to FIG. 6, FIG. 6 is a schematic flowchart of a file uploading method in cloud storage according to a third implementation manner of the present application. The file uploading method in cloud storage includes the following steps:
Step S501: Receive an upload request submitted by a client, where the upload request includes an eigenvalue of a target file to be uploaded by the client.

When the upload request is received, the eigenvalue is parsed from the upload request. The upload request may further include a storage path and the like, and the storage path is a path for which the client applies to store the eigenvalue.

Step S502: Determine, according to the upload request, whether the client needs to upload the target file.

The eigenvalue is basic information of the target file, and the eigenvalue may be used to map the target file. Therefore, the determining, according to the upload request, whether the client needs to upload the target file is specifically determining, according to the eigenvalue, whether the target file needs to be uploaded.

Step S503: If the client needs to upload the target file, send an upload instruction to the client, so that the client uploads the target file to a file server according to the upload instruction.

It is determined that the client needs to upload the target file, which indicates that the client has permission to upload the target file, and that the target file to be uploaded is valid.

According to the file uploading method in cloud storage in this implementation manner, an upload instruction is sent to a client only after it is first determined, according to an upload request submitted by the client, that the client needs to upload a target file, and the client uploads the target file according to the upload instruction. Therefore, a problem in the prior art that checking is performed only after file uploading is complete is solved, and an uploading process is optimized, thereby avoiding a waste of traffic, reducing consumption of an application server, and improving uploading efficiency.

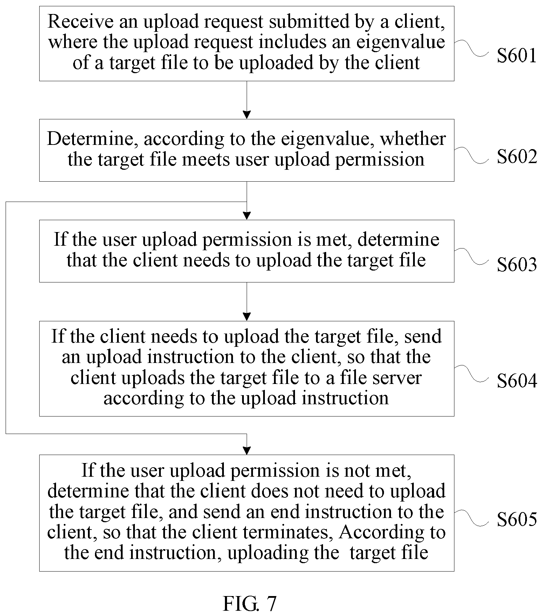

Referring to FIG. 7, FIG. 7 is a schematic flowchart of a file uploading method in cloud storage according to a fifth implementation manner of the present application. The file uploading method in cloud storage includes the following steps:
Step S601: Receive an upload request submitted by a client, where the upload request includes an eigenvalue of a target file to be uploaded by the client.
Step S602: Determine, according to the eigenvalue, whether the target file meets user upload permission.

The eigenvalue includes one or more of a size, a type, and a name of the target file. It may be determined, by detecting at least one of the size, the type, and the name of the target file, whether the user upload permission is met.

Step S603: If the user upload permission is met, determine that the client needs to upload the target file.

If the size of the target file does not exceed a permitted range and is smaller than or equal to available storage space of a user, the type of the target file belongs to a type that is permitted to be uploaded, or the name of the target file meets a specification, it is determined that the user upload permission is met.

Step S604: If the client needs to upload the target file, send an upload instruction to the client, so that the client uploads the target file to a file server according to the upload instruction.

Step S605: If the user upload permission is not met, determine that the client does not need to upload the target file, and send an end instruction to the client, so that the client terminates, according to the end instruction, uploading the target file.

Opposite to step S603, if the size of the target file exceeds the permitted range or is larger than the available storage space of the user, the type of the target file does not belong to the type that is permitted to be uploaded, or the name of the target file does not meet the specification, it is determined that the user upload permission is not met.

Refer to related steps of the fourth implementation manner for step S601 and step S604, which are in a scope that is easily understood by a person skilled in the art, and details are not described herein again.

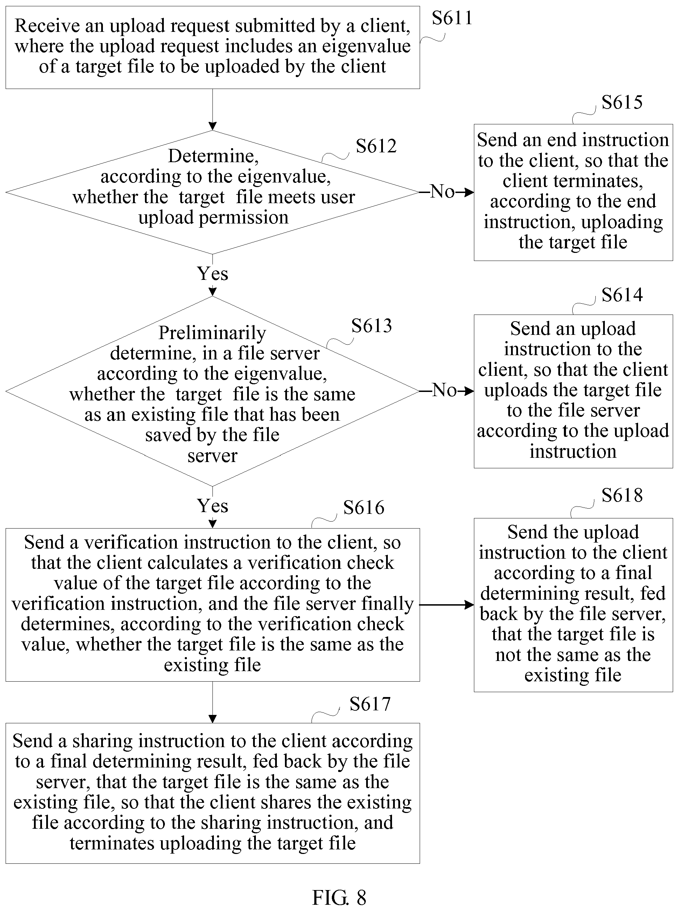

Referring to FIG. 8, FIG. 8 is a schematic flowchart of a file uploading method in cloud storage according to a sixth implementation manner of the present application. The file uploading method in cloud storage includes the following steps:
Step S611: Receive an upload request submitted by a client, where the upload request includes an eigenvalue of a target file to be uploaded by the client.
Step S612: Determine, according to the eigenvalue, whether the target file meets user upload permission, and if yes, perform step S613, and if not, perform step S615.

The eigenvalue includes one or more of a size, a type, and a name of the target file, but the present application is not limited thereto. The eigenvalue may also include other information of the target file, or may further include a storage path of the eigenvalue.

Each user in cloud storage has user upload permission, so that the client may be prevented from performing uploading at will, and security of the cloud storage is strengthened. The user upload permission may be expressed by using a list, for example, refer to Table 1.

**Table 1 User upload permission of different users**

| User name | Total space | Used space | Size that is permitted to be uploaded | Type that is permitted to be uploaded | Whether a file of a same name is permitted to be overwritten |
|---|---|---|---|---|---|
| User1 | 5GB | 3.1GB | 1GB | Image/png Image/gif | No |
| User2 | 8GB | 5GB | 500MB | text/html text/xml | Yes |

User name in Table 1 represents each user. Corresponding to each user name, user storage space of each user includes total space and used space, and a size that is permitted to be uploaded is a size of a single file. A type that is permitted to be uploaded is a type of a file. In Table 1, a name that is permitted to be uploaded is not shown, and permission about whether a file of a same name is permitted to be overwritten is also added.

Correspondingly, the upload request may also be uploaded in a manner of a list, for example, refer to Table 2, and Table 2 includes the eigenvalue and the storage path.

**Table 2 Upload request, submitted by a client, of different target files**

| Name | Size | Type | Initial check value | Storage path |
|---|---|---|---|---|
| File1 | 100MB | Image/png | Md5:aaabbbccc | F3 :/Path3/a |
| | | | SHA1:xxxyyyzzz | F2:/Path2/c |
| File2 | 15KB | Image/gif | Md5:aaabbbccc | F4:/Path4/b |
| | | | SHA1 :xxxyyyzzz | |

In Table 2, the eigenvalue includes the name, the size, the type, the initial check value, and the storage path, which may represent basic information of a target file. It may be learned whether the user upload permission is met by separately comparing each item in Table 2 with a corresponding item in the user upload permission. By using a user name User1 as an example, a size that is permitted to be uploaded by the User1 is 1GB, and the used space is 3.1GB, while a size of a target file is 100MB. Therefore, the size of the target file meets a requirement. Types that are permitted to be uploaded by the User1 include Image/png. Therefore, a type of the target file meets a requirement. Herein, it may be considered that a name of the target file is not limited, and may be selected randomly. If a storage path F3:/Path3/a or F2:/Path2/c of the eigenvalue is valid and available, the target file File1 meets the user upload permission.

Step S613: Preliminarily determine, in a file server according to the eigenvalue, whether the target file is the same as an existing file that has been saved by the file server, and if yes, perform step S616, and if not, perform step S614.

As described in Table 2, the eigenvalue further includes the initial check value of the target file. Step S613 specifically includes: preliminarily determining, in the file server according to the one or more of the size, the type, and the name of the target file, and the initial check value, whether the target file is the same as the existing file that has been saved by the file server. Because the initial check value is involved in the preliminarily determining, accuracy of the determining is higher.

Step S614: Send an upload instruction to the client, so that the client uploads the target file to the file server according to the upload instruction.

If a preliminary determining result is that the target file is not the same as the existing file that has been saved by the file server, it indicates that the target file to be uploaded does not exist in the file server, and it is determined that the client needs to upload the target file. Therefore, the client needs to upload the target file.

Step S615: Send an end instruction to the client, so that the client terminates, according to the end instruction, uploading the target file.

If the user upload permission is not met, it is determined that the client does not need to upload the target file, and the client needs to terminate uploading the target file. Certainly, sending the end instruction is only one manner, and another manner may also be used in the present application. For example, when it is determined that the client does not need to upload the target file, that the client uploads the target file is not limited, but the target file is rejected to be received.

Step S616: If a preliminary determining result is that the target file is the same as the existing file that has been saved by the file server, send a verification instruction to the client, so that the client calculates a verification check value of the target file according to the verification instruction, and the file server finally determines, according to the verification check value, whether the target file is the same as the existing file.

Although the preliminary determining result is that the target file is the same as the existing file that has been saved by the file server, it still cannot be completely considered that the target file to be uploaded by the client is the existing file. Therefore, the verification instruction further needs to be sent to the client. Both the initial check value and the verification check value are an MD5 value or an SHA1 value, but the initial check value only corresponds to data of a relatively small byte range of the target file, while the verification check value corresponds to data of all byte ranges of the target file. In an actual application, the verification check value may be received after the verification instruction is sent to the client, and it is finally determined, in the file server according to the verification check value, whether the target file is the same as the existing file. However, the file server stores the existing file, and a process of the final determining is performed in the file server. Therefore, taking into consideration of an aspect of reducing data transmission times and processing time, in this implementation manner, the client directly submits the verification check value to the file server, so that the file server performs the final determining more directly and conveniently.

Step S617: Send a sharing instruction to the client according to a final determining result, fed back by the file server, that the target file is the same as the existing file, so that the client shares the existing file according to the sharing instruction, and terminates uploading the target file.

If the target file and the existing file are a same file, the client may not upload the target file any more, but only needs to share the existing file. The existing file is shared, that is, the user obtains permission to use the existing file, and may download the existing file anytime anywhere.

Step S618: Send the upload instruction to the client according to a final determining result, fed back by the file server, that the target file is not the same as the existing file.

If the target file is not the same as the existing file, the client still needs to upload the target file. In another implementation manner, the end instruction may be sent when the final determining result is that the target file is not the same as the existing file that has been saved by the file server, so as to terminate this uploading operation.

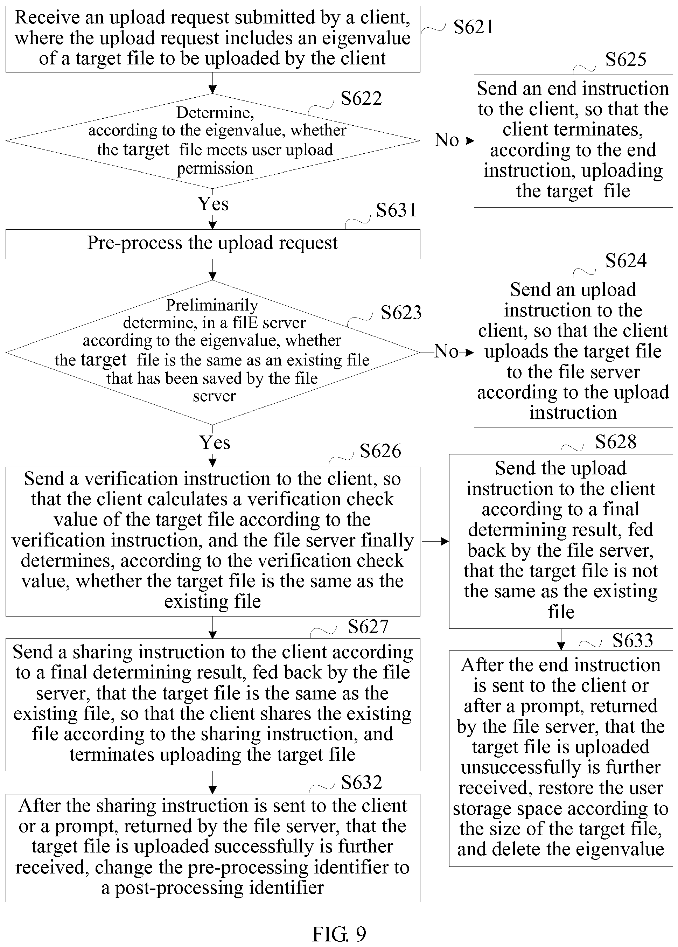

Referring to FIG. 9, FIG. 9 is a schematic flowchart of a file uploading method in cloud storage according to a seventh implementation manner of the present application. Steps S621, S622, S623, S624, S625, S626, S627, and S628 of the file uploading method in this implementation manner are the same as related steps of the sixth implementation manner, and differences lie in that, this implementation manner further includes step S631 after step S622 and before step S623, and this implementation manner further includes step S632 and step S633. The file uploading method in cloud storage includes the following steps:
Step S621: Receive an upload request submitted by a client, where the upload request includes an eigenvalue of a target file to be uploaded by the client.
Step S622: Determine, according to the eigenvalue, whether the target file meets user upload permission, and if yes, perform step S631, and if not, perform step S625.
Step S631: Pre-process the upload request.

An operation of the pre-processing includes: excluding user storage space in advance according to a size of the target file, and adding a pre-processing identifier to the eigenvalue. In some occasions, a user may submit multiple upload requests at the same time, and a capacity of a target file corresponding to all the upload requests may exceed the user storage space. In most cases, the target file may be uploaded only when a capacity of the user storage space is larger than that of the target file. Therefore, by excluding the user storage space in advance, the user may be informed instantly whether the user storage space thereof is enough.

The eigenvalue is used as basic information of the target file, and the pre-processing identifier is added to the eigenvalue, so as to indicate that the target file is not uploaded yet and is in a state of waiting to be uploaded.

Step S623: Preliminarily determine, in a file server according to the eigenvalue, whether the target file is the same as an existing file that has been saved by the file server, and if yes, perform step S626, and if not, perform step S624.

Step S624: Send an upload instruction to the client, so that the client uploads the target file to the file server according to the upload instruction.

If a preliminary determining result is no, it is determined that the client needs to upload the target file.

Step S625: Send an end instruction to the client, so that the client terminates, according to the end instruction, uploading the target file.

If a preliminary determining result is no, it is determined that the client does not need to upload the target file, and the client is rejected to upload the target file.

Step S626: Send a verification instruction to the client, so that the client calculates a verification check value of the target file according to the verification instruction, and the file server finally determines, according to the verification check value, whether the target file is the same as the existing file.

Step S627: Send a sharing instruction to the client according to a final determining result, fed back by the file server, that the target file is the same as the existing file, so that the client shares the existing file according to the sharing instruction, and terminates uploading the target file.

Step S628: Send the upload instruction to the client according to a final determining result, fed back by the file server, that the target file is not the same as the existing file.

Step S632: After the sharing instruction is sent to the client or a prompt, returned by the file server, that the target file is uploaded successfully is further received, change the pre-processing identifier to a post-processing identifier.

The client shares the existing file or succeeds in uploading the target file, and the user storage space is actually reduced. Because the user storage space has been excluded in step S631 in advance, no modification or change is made to the user storage space in this case, and only the pre-processing identifier is changed to the post-processing identifier. The post-processing identifier is used to indicate that a file (the target file or the existing file) mapped by the eigenvalue has been uploaded and is in a state of being uploaded already.

Step S633: After the end instruction is sent to the client or after a prompt, returned by the file server, that the target file is uploaded unsuccessfully is further received, restore the user storage space according to the size of the target file, and delete the eigenvalue.

The client terminates uploading the target file or fails to upload the target file, and the user storage space is not reduced actually. However, the user storage space has been excluded in step S631 in advance. Therefore, the user storage space needs to be restored. Because the target file does not exist in the file server, the eigenvalue further needs to be deleted. It should be noted that, that the target file is uploaded unsuccessfully refers to that data of all byte ranges of the target file is uploaded unsuccessfully. Herein, there is an exception. If the target file is divided into several entities with different byte ranges for uploading, and if only one entity is uploaded unsuccessfully, the user storage space is restored only according to a byte range corresponding to the entity that is not uploaded, and the eigenvalue is reserved. Although the target file lacks some entities and is incomplete, the client can still download or edit the target file. Whether the target file can be opened normally is not in the protection scope of the present application.

In this implementation manner, if the eigenvalue is not deleted or the pre-processing identifier is not changed to the post-processing identifier within a predetermined time limit, the user storage space is still restored according to the size of the target file, and the eigenvalue is deleted. That is, there is a time limit for the pre-processing, and if a corresponding operation is not performed within the time limit, an inverse process of the pre-processing is performed.

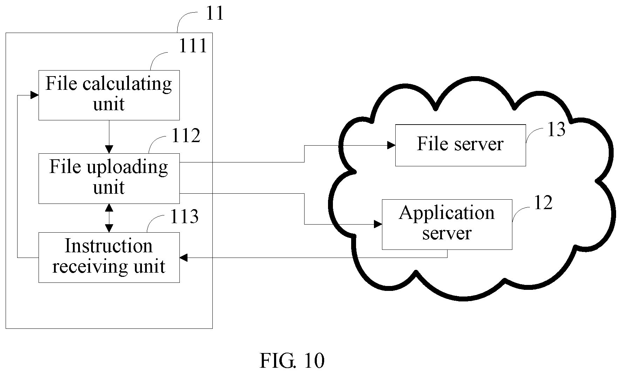

Referring to FIG. 10, FIG. 10 is a schematic structural diagram of a client in cloud storage according to an implementation manner of the present application. For clear description, both an application server 12 and a file server 13 are further shown in FIG. 10.

A client 11 includes a file calculating unit 111, a file uploading unit 112, and an instruction receiving unit 113. As a user equipment, the client 11 may be a device such as a personal computer, a tablet computer, or a mobile terminal.

The file calculating unit 111 is configured to extract an eigenvalue of a target file to be uploaded, and transmit the eigenvalue to the file uploading unit 112.

The file uploading unit 112 is configured to acquire the eigenvalue from the file calculating unit 111, and submit an upload request including the eigenvalue to the application server 12, so that the application server 12 determines, according to the upload request, whether the client 11 needs to upload the target file.

The instruction receiving unit 113 is configured to receive an execution instruction that is sent, according to a determining result, by the application server 12, and if the execution instruction is an upload instruction, transmit the upload instruction to the file uploading unit 112.

The file uploading unit 112 is further configured to upload the target file to the file server 13 according to the upload instruction. In this implementation manner, the file uploading unit 112 is specifically configured to divide the target file into several entities according to the upload instruction, and successively upload each entity to the file server 13, where when each entity is uploaded, a latter entity is uploaded sequentially by starting from a former entity that has been uploaded, until all the entities are uploaded.

The execution instruction may also be another instruction. If the execution instruction is an end instruction instead of the upload instruction, the instruction receiving unit 113 transmits the end instruction to the file uploading unit 112. The file uploading unit 112 is further configured to terminate, according to the end instruction, uploading the target file.

When a target file is to be uploaded by the client 11 in this implementation manner, an eigenvalue of the target file needs to be first extracted, and an upload request including the eigenvalue is submitted to an application server 12; and the client 11 uploads the target file to a file server 13 only when the application server 12 determines, according to the upload request, that the client 11 needs to upload the target file. Therefore, a problem in the prior art that an application server cannot perform checking before a client uploads a file is solved, and an uploading process is optimized, thereby avoiding a waste of traffic, reducing consumption of the application server, and improving uploading efficiency.

Referring to FIG. 10, in another implementation manner of the client in cloud storage in the present application, as basic information of the target file, the eigenvalue includes one or more of a size, a type, and a name of the target file for the application server 12 to determine whether the target file meets user upload permission, or preliminarily determine whether the target file is the same as an existing file that has been saved by the file server 13. The eigenvalue further includes an initial check value of the target file for the application server 12 to preliminarily determine whether the target file is the same as the existing file that has been saved by the file server 13. As described above, if the execution instruction is a verification instruction instead of the upload instruction, the instruction receiving unit 113 transmits the verification instruction to the file calculating unit 111. The file calculating unit 111 is further configured to calculate a verification check value of the target file according to the verification instruction, and transmit the verification check value to the file uploading unit 112. The file uploading unit 112 is further configured to acquire the verification check value from the file calculating unit 111, and submit the verification check value to the file server 13, so that the file server 13 finally determines, according to the verification check value, whether the target file is the same as the existing file that has been saved by the file server 13, and feeds back a final determining result to the application server 12. In this implementation manner, the initial check value and the verification check value are separately an MD5 value or an SHA1 value corresponding to different byte ranges of the target file.

Because the file server 13 performs the final determining, the application server 12 may send another instruction. If the instruction receiving unit 113 further receives a sharing instruction from the application server 12, the instruction receiving unit 113 further transmits the sharing instruction to the file uploading unit 112. The file uploading unit 112 is further configured to acquire the sharing instruction from the instruction receiving unit 113, share the existing file according to the sharing instruction, and terminate uploading the target file.

If the instruction receiving unit 113 further receives the upload instruction from the application server 12, the instruction receiving unit 113 further transmits the upload instruction to the file uploading unit 112. The file uploading unit 112 is further configured to acquire the upload instruction from the instruction receiving unit 113, and upload the target file to the file server 13 according to the upload instruction.

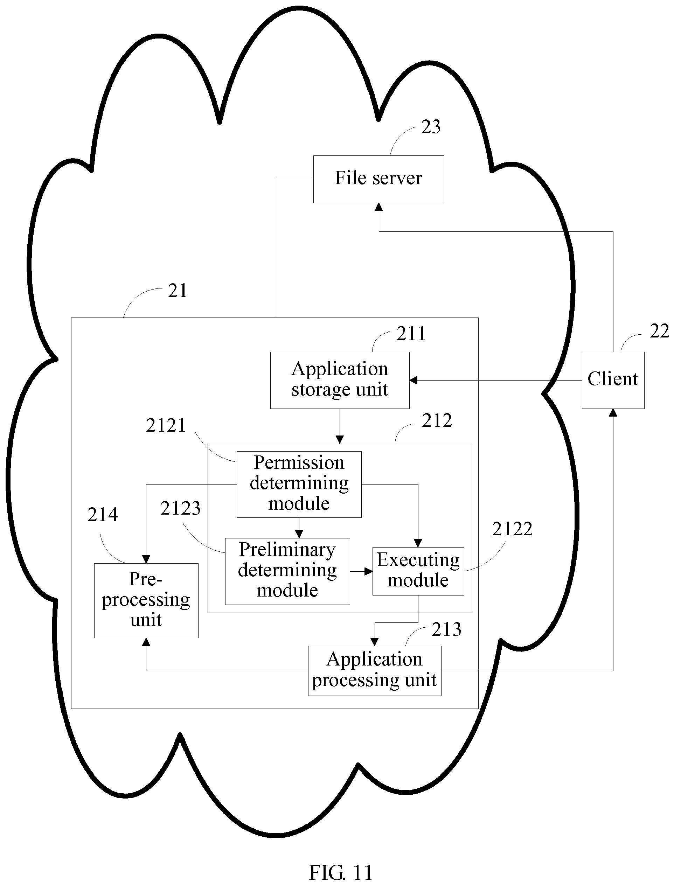

Referring to FIG. 11, FIG. 11 is a schematic structural diagram of an application server in cloud storage according to an implementation manner of the present application. For clear description, both a client 22 and a file server 23 are shown in FIG. 11.

An application server 21 includes an application storage unit 211, an application detecting unit 212, and an application processing unit 213. As a data center, the application server 21 is generally a multi-line equipment room or a BGP (Border Gateway Protocol, Border Gateway Protocol) equipment room.

The application storage unit 211 is configured to receive an upload request submitted by the client 22, and transmit the upload request to the application detecting unit 212, where the upload request includes an eigenvalue of a target file to be uploaded by the client 22.

The application detecting unit 212 is configured to acquire the upload request from the application storage unit 211, and determine, according to the upload request, whether the client 22 needs to upload the target file.

The application processing unit 213 is configured to receive a determining result, sent by the application detecting unit 212, that the client 22 needs to upload the target file, and send an upload instruction to the client 22, so that the client 22 uploads the target file to the file server 23 according to the upload instruction.

According to the application server 21 in cloud storage in this implementation manner, it is determined, according to an upload request submitted by a client 22, whether the client 22 needs to upload a target file, and the client 22 is permitted to upload the target file to a file server 23 only when the client 22 needs to upload the target file. Therefore, a problem in the prior art that an application server cannot perform checking before a client uploads a file is solved, and an uploading process is optimized, thereby avoiding a waste of traffic, reducing consumption of the application server, and improving uploading efficiency.

Still referring to FIG. 11, in another implementation manner of the application server in cloud storage of the present application, the eigenvalue includes one or more of a size, a type, and a name of the target file, and the application detecting unit 212 includes a permission determining module 2121 and an executing module 2122. The permission determining module 2121 is configured to determine, according to the eigenvalue, whether the target file meets user upload permission. The executing module 2122 is configured to: when a determining result of the permission determining module 2121 is yes, send, to the application processing unit 213, a determining result that the client 22 needs to upload the target file, or when a determining result of the permission determining module 2121 is no, send, to the application processing unit 213, a determining result that the client 22 does not need to upload the target file. The application processing unit 213 is further configured to receive the determining result, sent by the executing module 2122, that the client 22 does not need to upload the target file, and send an end instruction to the client 22, so that the client 22 terminates, according to the end instruction, uploading the target file.

That is, the application server 21 allows the client 22 to upload the target file only when the target file meets the user upload permission, so that reliability and practicability of the application server 21 can be improved.

Still referring to FIG. 11, in another implementation manner of the application server in cloud storage in the present application, the application detecting unit 212 further includes a preliminary determining module 2123. The preliminary determining module 2123 is configured to: when the determining result of the permission determining module 2121 is yes, further preliminarily determine, in the file server 23 according to the eigenvalue, whether the target file is the same as an existing file that has been saved by the file server 23. The executing module 2122 is configured to: when a determining result of the preliminary determining module 2123 is no, send, to the application processing unit 213, the determining result that the client 22 needs to upload the target file.

The eigenvalue further includes an initial check value of the target file, and the preliminary determining module 2123 is specifically configured to preliminarily determine, in the file server 23 according to the one or more of the size, the type, and the name of the target file, and the initial check value, whether the target file is the same as the existing file that has been saved by the file server 23.

The application processing unit 213 is further configured to: when a determining result of the preliminary determining module 2123 is yes, send a verification instruction to the client 22, so that the client 22 calculates a verification check value of the target file according to the verification instruction, and the file server 23 finally determines, according to the verification check value, whether the target file is the same as the existing file.

The application processing unit 213 is further configured to send a sharing instruction to the client 22 according to a final determining result, fed back by the file server 23, that the target file is the same as the existing file, so that the client 22 shares the existing file according to the sharing instruction, and terminates uploading the target file.

The application processing unit 213 is further configured to send an upload instruction to the client 22 according to a final determining result, fed back by the file server 23, that the target file is not the same as the existing file.

In this implementation manner, after the permission determining module 2121 performs determining, the preliminary determining module 2123 continues to perform determining, so that space may be prevented from being wasted when a same file is uploaded repeatedly.

Still referring to FIG. 11, in another implementation manner of the application server in cloud storage in the present application, the application server 21 further includes a pre-processing unit 214. The pre-processing unit 214 is configured to: when the permission determining module 2121 determines that the user upload permission is met, pre-process the upload request. In this implementation manner, an operation of the pre-processing includes: excluding user storage space in advance according to the size of the target file, and adding a pre-processing identifier to the eigenvalue.

The pre-processing unit 214 is specifically configured to: after the application processing unit 213 sends the end instruction to the client 22 or further receives a prompt, returned by the file server 23, that the target file is uploaded unsuccessfully, restore the user storage space according to the size of the target file, and delete the eigenvalue.

The pre-processing unit 214 is further specifically configured to: after the application processing unit 213 sends the sharing instruction to the client 22 or further receives a prompt, returned by the file server 23, that the target file is uploaded successfully, change the pre-processing identifier to a post-processing identifier.

The pre-processing unit 214 sets a predetermined time limit, and if the eigenvalue is not deleted or the pre-processing identifier is not changed to the post-processing identifier within the predetermined time limit, the pre-processing unit 214 restores the user storage space according to the size of the target file, and deletes the eigenvalue.

That the application server 21 receives the upload request indicates that an uploading process has been started, and when the client 22 submits an upload request of multiple target files at the same time, the application server 21 may permit to upload all the target files. Therefore, if the user storage space is not enough, some target files cannot be stored, which causes an upload failure, and also causes a waste of traffic. However, the pre-processing unit 214 may exclude the user storage space when receiving the upload request, and if the user storage space is not enough, the application server 21 naturally determines that some upload requests do not meet the user upload permission, thereby avoiding the foregoing problem.

The present application further provides a cloud storage system, where the cloud storage system includes the client in the foregoing implementation manner and the application server in the foregoing implementation manner. Refer to related description of the foregoing implementation manners for a specific working process of the cloud storage system, refer to the prior art for other parts of the cloud storage system, and details are not described herein again.

In all the implementation manners provided in the present application, it should be understood that the disclosed apparatus and method may be implemented in other manners. For example, the provided apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The functional modules described as separate parts may or may not be physically separate, and parts displayed as units may or may not be physical units, may be located in one position, or may be distributed on a plurality of network units. Some or all of the units may be selected according to actual needs to achieve the objectives of the solutions of the implementation manners.

In addition, functional modules in the embodiments of the present application may be integrated into one processing unit, or each of the functional modules may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc. By using the foregoing manners, according to the file uploading method, the client, and the application server in cloud storage, and the cloud storage system in the present invention, an eigenvalue of a target file is extracted first before the target file is uploaded, an upload request including the eigenvalue is submitted to an application server, and a client uploads the target file only when the application server determines, according to the upload request, that the client needs to upload the target file. Therefore, a problem in the prior art that an application server cannot perform checking before a client uploads a file is solved, and an uploading process is optimized, thereby avoiding a waste of traffic, reducing consumption of the application server, and improving uploading efficiency.

The foregoing descriptions are merely embodiments of the present invention, and are not intended to limit the scope of the present invention.

## Claims

1. A file uploading method in cloud storage, wherein the file uploading method comprises:
extracting an eigenvalue of a target file to be uploaded;
submitting an upload request comprising the eigenvalue to an application server (12), so that the application server (12) determines, according to the upload request, whether a client (11) needs to upload the target file;
receiving an execution instruction that is sent, according to a determining result, by the application server (12); and
if the execution instruction is an upload instruction, uploading the target file to a file server (13) according to the upload instruction, wherein
the eigenvalue comprises one or more of a size, a type, and a name of the target file for the application server (12) to determine whether the target file meets user upload permission, or preliminarily determine whether the target file is the same as an existing file that has been saved by the file server (13); and wherein the file uploading method further comprises:
if the execution instruction is a verification instruction, calculating a verification check value of the target file according to the verification instruction; and
submitting the verification check value to the file server (13), so that the file server (13) finally determines, according to the verification check value, whether the target file is the same as the existing file that has been saved by the file server (13), and feeds back a final determining result to the application server (12).

2. The file uploading method according to claim 1, wherein the eigenvalue further comprises an initial check value of the target file for the application server (12) to preliminarily determine whether the target file is the same as the existing file that has been saved by the file server (13).

3. The file uploading method according to claim 1, wherein the file uploading method further comprises:
if the execution instruction is an end instruction, terminating, according to the end instruction, uploading the target file.

4. The file uploading method according to claim 1, wherein the file uploading method further comprises:
if a sharing instruction is further received from the application server (12), sharing the existing file, and terminating uploading the target file.

5. The file uploading method according to claim 1, wherein the file uploading method further comprises:
if the upload instruction is further received from the application server (12), uploading the target file to the file server (13) according to the upload instruction.

6. A client (11) in cloud storage, wherein the client (11) comprises a file calculating unit (111), a file uploading unit (112), and an instruction receiving unit (113), wherein
the file calculating unit (111) is configured to extract an eigenvalue of a target file to be uploaded, and transmit the eigenvalue to the file uploading unit (112);
the file uploading unit (112) is configured to acquire the eigenvalue from the file calculating unit (111), and submit an upload request comprising the eigenvalue to an application server (12), so that the application server (12) determines, according to the upload request, whether the client (11) needs to upload the target file; and
the instruction receiving unit (113) is configured to receive an execution instruction that is sent, according to a determining result, by the application server (12), and if the execution instruction is an upload instruction, transmit the upload instruction to the file uploading unit (112), wherein
the file uploading unit (112) is further configured to upload the target file to a file server (13) according to the upload instruction, and wherein
the eigenvalue comprises one or more of a size, a type, and a name of the target file for the application server (12) to determine whether the target file meets user upload permission, or preliminarily determine whether the target file is the same as an existing file that has been saved by the file server (13); and wherein if the execution instruction is a verification instruction, the instruction receiving unit (113) transmits the verification instruction to the file calculating unit (111), and the file calculating unit (111) is further configured to calculate a verification check value of the target file according to the verification instruction, and transmit the verification check value to the file uploading unit (112); and
the file uploading unit (112) is further configured to acquire the verification check value from the file calculating unit (111), and submit the verification check value to the file server (13), so that the file server finally determines, according to the verification check value, whether the target file is the same as the existing file that has been saved by the file server (13), and feeds back a final determining result to the application server (12).

7. The client (11) according to claim 6, wherein the eigenvalue further comprises an initial check value of the target file for the application server (12) to preliminarily determine whether the target file is the same as the existing file that has been saved by the file server (13).

8. The client (11) according to claim 6, wherein if the execution instruction is an end instruction, the instruction receiving unit (113) transmits the end instruction to the file uploading unit (112), and the file uploading unit (112) is further configured to terminate, according to the end instruction, uploading the target file.

9. The client (11) according to claim 6, wherein if the instruction receiving unit further receives a sharing instruction from the application server (12), the instruction receiving unit (113) further transmits the sharing instruction to the file uploading unit (112), and the file uploading unit (112) is further configured to acquire the sharing instruction from the instruction receiving unit (113), share the existing file according to the sharing instruction, and terminate uploading the target file.

10. The client (11) according to claim 6, wherein if the instruction receiving unit (113) further receives the upload instruction from the application server (12), the instruction receiving unit (113) further transmits the upload instruction to the file uploading unit (112), and the file uploading unit (112) is further configured to acquire the upload instruction from the instruction receiving unit (113), and upload the target file to the file server (13) according to the upload instruction.

## Patentansprüche

1. Verfahren zum Hochladen von Dateien in einen Cloud-Speicher, wobei das Verfahren zum Hochladen von Dateien Folgendes umfasst:
Extrahieren eines Eigenwertes einer hochzuladenden Zieldatei;
Absenden einer Hochladeanfrage, die den Eigenwert umfasst, an einen Anwendungsserver (12), sodass der Anwendungsserver (12) nach der Hochladeanweisung bestimmt, ob ein Client (11) die Zieldatei hochladen muss;
Empfangen einer Ausführungsanweisung, die nach einem Bestimmungsergebnis vom Anwendungsserver (12) gesendet wird; und
wenn die Ausführungsanweisung eine Hochladeanweisung ist, Hochladen der Zieldatei auf einen Dateiserver (13) nach der Hochladeanweisung, wobei der Eigenwert eines oder mehrere aus einer Größe, einem Typ und einem Namen der Zieldatei für den Anwendungsserver (12) umfasst, um zu bestimmen, ob die Zieldatei die Erlaubnis des Benutzers zum Hochladen erfüllt, oder um vorläufig zu bestimmen, ob die Zieldatei die gleiche wie eine vorhandene Datei ist, die vom Dateiserver (13) gespeichert wurde; und
wobei das Verfahren zum Hochladen von Dateien ferner Folgendes umfasst:
wenn es sich bei der Ausführungsanweisung um eine Verifikationsanweisung handelt, Berechnen eines Verifikations-Prüfwertes der Zieldatei nach der Verifikationsanweisung; und
Absenden des Verifikations-Prüfwertes an den Dateiserver (13), sodass der Dateiserver (13) schließlich nach dem Verifikations-Prüfwert bestimmt, ob die Zieldatei die gleiche ist wie die vorhandene Datei, die vom Dateiserver (13) gespeichert wurde, und ein endgültiges Bestimmungsergebnis an den Anwendungsserver (12) zurückmeldet.

2. Verfahren zum Hochladen von Dateien nach Anspruch 1, wobei der Eigenwert ferner einen ursprünglichen Prüfwert der Zieldatei für den Anwendungsserver (12) umfasst, um vorläufig zu bestimmen, ob die Zieldatei die gleiche ist wie die vorhandene Datei, die vom Dateiserver (13) gespeichert wurde.

3. Verfahren zum Hochladen von Dateien nach Anspruch 1, wobei das Verfahren zum Hochladen von Dateien ferner Folgendes umfasst:
wenn die Ausführungsanweisung eine Endanweisung ist, Beenden, nach der Endanweisung, des Hochladens der Zieldatei.

4. Verfahren zum Hochladen von Dateien nach Anspruch 1, wobei das Verfahren zum Hochladen von Dateien ferner Folgendes umfasst:
wenn ferner eine Freigabeanweisung vom Anwendungsserver (12) empfangen wird, Freigeben der vorhandenen Datei, und Beenden des Hochladens der Zieldatei.

5. Verfahren zum Hochladen von Dateien nach Anspruch 1, wobei das Verfahren zum Hochladen von Dateien ferner Folgendes umfasst:
wenn die Hochladeanweisung ferner vom Anwendungsserver (12) empfangen wird, Hochladen der Zieldatei auf den Dateiserver (13) nach der Hochladeanweisung.

6. Client (11) in einem Cloud-Speicher, wobei der Client (11) eine Dateiberechnungseinheit (111), eine Dateihochladeeinheit (112) und eine Anweisungsempfangseinheit (113) umfasst, wobei die Dateiberechnungseinheit (111) dafür konfiguriert ist, einen Eigenwert einer hochzuladenden Zieldatei zu extrahieren, und den Eigenwert an die Dateihochladeeinheit (112) zu übertragen;
wobei die Dateihochladeeinheit (112) dafür konfiguriert ist, den Eigenwert von der Dateiberechnungseinheit (111) zu erfassen, und um eine Hochladeanfrage an einen Anwendungsserver (12) abzusenden, die den Eigenwert umfasst, sodass der Anwendungsserver (12) nach der Hochladeanfrage bestimmt, ob der Client (11) die Zieldatei hochladen muss; und
wobei die Anweisungsempfangseinheit (113) dafür konfiguriert ist, eine Ausführungsanweisung zu empfangen, die nach einem Bestimmungsergebnis vom Anwendungsserver (12) gesendet wird, und, wenn die Ausführungsanweisung eine Hochladeanweisung ist, die Hochladeanweisung an die Dateihochladeeinheit (112) zu übertragen, wobei die Dateihochladeeinheit (112) ferner dafür konfiguriert ist, die Zieldatei nach der Hochladeanweisung auf einen Dateiserver (13) hochzuladen, und wobei der Eigenwert eines oder mehrere aus einer Größe, einem Typ und einem Namen der Zieldatei für den Anwendungsserver (12) umfasst, um zu bestimmen, ob die Zieldatei die Erlaubnis des Benutzers zum Hochladen erfüllt, oder um vorläufig zu bestimmen, ob die Zieldatei die gleiche wie eine vorhandene Datei ist, die vom Dateiserver (13) gespeichert wurde; und
wobei, wenn die Ausführungsanweisung eine Verifizierungsanweisung ist, die Anweisungsempfangseinheit (113) die Verifizierungsanweisung an die Dateiberechnungseinheit (111) überträgt, und die Dateiberechnungseinheit (111) ferner dafür konfiguriert ist, einen Verifizierungsprüfwert der Zieldatei nach der Verifizierungsanweisung zu berechnen und den Verifizierungsprüfwert an die Dateihochladeeinheit (112) zu übertragen; und
die Dateihochladeeinheit (112) ferner dafür konfiguriert ist, den Verifizierungsprüfwert von der Dateiberechnungseinheit (111) zu erfassen, und den Verifizierungsprüfwert an den Dateiserver (13) abzusenden, sodass der Dateiserver schließlich nach dem Verifizierungsprüfwert bestimmt, ob die Zieldatei die gleiche wie die vorhandene Datei ist, die von dem Dateiserver (13) gespeichert wurde, und ein endgültiges Bestimmungsergebnis an den Anwendungsserver (12) zurückmeldet.

7. Client (11) nach Anspruch 6, wobei der Eigenwert ferner einen ursprünglichen Prüfwert der Zieldatei für den Anwendungsserver (12) umfasst, um vorläufig zu bestimmen, ob die Zieldatei die gleiche ist wie die vorhandene Datei, die vom Dateiserver (13) gespeichert wurde.

8. Client (11) nach Anspruch 6, wobei, wenn die Ausführungsanweisung eine Endanweisung ist, die Anweisungsempfangseinheit (113) die Endanweisung an die Dateihochladeeinheit (112) überträgt, und die Dateihochladeeinheit (112) ferner dafür konfiguriert ist, nach der Endanweisung das Hochladen der Zieldatei zu beenden.

9. Client (11) nach Anspruch 6, wobei, wenn die Anweisungsempfangseinheit ferner eine Freigabeanweisung vom Anwendungsserver (12) empfängt, die Anweisungsempfangseinheit (113) ferner die Freigabeanweisung an die Dateihochladeeinheit (112) überträgt, und die Dateihochladeeinheit (112) ferner dafür konfiguriert ist, die Freigabeanweisung von der Anweisungsempfangseinheit (113) zu erfassen, die vorhandene Datei nach der Freigabeanweisung freizugeben, und das Hochladen der Zieldatei zu beenden.

10. Client (11) nach Anspruch 6, wobei, wenn die Anweisungsempfangseinheit (113) ferner die Hochladeanweisung vom Anwendungsserver (12) empfängt, die Anweisungsempfangseinheit (113) ferner die Hochladeanweisung an die Dateihochladeeinheit (112) überträgt, und die Dateihochladeeinheit (112) ferner dafür konfiguriert ist, die Hochladeanweisung von der Anweisungsempfangseinheit (113) zu erfassen, und die Zieldatei nach der Hochladeanweisung auf den Dateiserver (13) hochzuladen.

## Revendications

1. Procédé de téléchargement de fichier dans un stockage en nuage, le procédé de téléchargement de fichiers comprenant :
l'extraction d'une valeur propre d'un fichier cible à télécharger ;
la soumission d'une demande de téléchargement comprenant la valeur propre à un serveur d'applications (12), de sorte que le serveur d'applications (12) détermine, selon la demande de téléchargement, si un client (11) doit télécharger le fichier cible ; la réception d'une instruction d'exécution qui est envoyée, selon un résultat déterminant, par le serveur d'applications (12) ; et
si l'instruction d'exécution est une instruction de téléchargement, le téléchargement du fichier cible sur un serveur de fichiers (13) selon l'instruction de téléchargement, la valeur propre comprenant une taille et/ou un type et/ou un nom de fichier cible pour le serveur d'applications (12) pour déterminer si le fichier cible satisfait à l'autorisation de téléchargement de l'utilisateur, ou la détermination au préalable si le fichier cible est le même qu'un fichier existant qui a été enregistré par le serveur de fichiers (13) ; et le procédé de téléchargement de fichiers comprenant en outre :
si l'instruction d'exécution est une instruction de vérification, le calcul d'une valeur de contrôle de vérification du fichier cible selon l'instruction de vérification ; et
la soumission de la valeur de contrôle de vérification au serveur de fichiers (13), de sorte que le serveur de fichiers (13) détermine finalement, selon la valeur de contrôle de vérification, si le fichier cible est le même que le fichier existant qui a été enregistré par le serveur de fichiers (13), et renvoie un résultat de détermination final au serveur d'applications (12).

2. Procédé de téléchargement de fichier selon la revendication 1, la valeur propre comprenant en outre une valeur de contrôle initiale du fichier cible pour le serveur d'applications (12) pour déterminer au préalable si le fichier cible est le même que le fichier existant qui a été enregistré par le serveur de fichiers (13).

3. Procédé de téléchargement de fichier selon la revendication 1, le procédé de téléchargement de fichier comprenant en outre :
si l'instruction d'exécution est une instruction de fin, l'achèvement, selon l'instruction de fin, du téléchargement du fichier cible.

4. Procédé de téléchargement de fichier selon la revendication 1, le procédé de téléchargement de fichier comprenant en outre :
si une instruction de partage est en outre reçue du serveur d'applications (12), le partage du fichier existant et l'achèvement du téléchargement du fichier cible.

5. Procédé de téléchargement de fichier selon la revendication 1, le procédé de téléchargement de fichier comprenant en outre :
si l'instruction de téléchargement est en outre reçue du serveur d'applications (12), le téléchargement du fichier cible vers le serveur de fichiers (13) selon l'instruction de téléchargement.

6. Client (11) dans le stockage en nuage, le client (11) comprenant une unité de calcul de fichiers (111), une unité de téléchargement de fichier (112), et une unité de réception d'instructions (113),
l'unité de calcul de fichiers (111) étant configurée pour extraire une valeur propre d'un fichier cible à télécharger et transmettre la valeur propre à l'unité de téléchargement de fichiers (112) ;
l'unité de téléchargement de fichiers (112) étant configurée pour acquérir la valeur propre à partir de l'unité de calcul de fichiers (111), et soumettre une demande de téléchargement comprenant la valeur propre à un serveur d'applications (12), de sorte que le serveur d'applications (12) détermine, selon la demande de téléchargement, si le client (11) a besoin de télécharger le fichier cible ; et
l'unité de réception d'instructions (113) étant configurée pour recevoir une instruction d'exécution qui est envoyée, selon un résultat déterminant, par le serveur d'applications (12), et si l'instruction d'exécution est une instruction de téléchargement, transmettre l'instruction de téléchargement à l'unité de téléchargement de fichiers (112),
l'unité de téléchargement de fichiers (112) étant en outre configurée pour télécharger le fichier cible sur un serveur de fichiers (13) selon l'instruction de téléchargement, et la valeur propre comprenant une taille et/ou un type et/ou un nom de fichier cible pour le serveur d'applications (12) pour déterminer si le fichier cible satisfait à l'autorisation de téléchargement de l'utilisateur, ou déterminer au préalable si le fichier cible est le même qu'un fichier existant qui a été enregistré par le serveur de fichiers (13) ; et si l'instruction d'exécution est une instruction de vérification, l'unité de réception d'instructions (113) transmettant l'instruction de vérification à l'unité de calcul de fichiers (111), et l'unité de calcul de fichiers (111) étant en outre configurée pour calculer une valeur de contrôle de vérification du fichier cible selon l'instruction de vérification, et transmettre la valeur de contrôle de vérification à l'unité de téléchargement de fichiers (112) ; et
l'unité de téléchargement de fichiers (112) étant en outre configurée pour acquérir la valeur de contrôle de vérification de l'unité de calcul de fichiers (111), et soumettre la valeur de contrôle de vérification au serveur de fichiers (13), de sorte que le serveur de fichiers détermine finalement, selon la valeur de contrôle de vérification, si le fichier cible est le même que le fichier existant qui a été enregistré par le serveur de fichiers (13), et renvoie un résultat de détermination final au serveur d'applications (12).

7. Client (11) selon la revendication 6, la valeur propre comprenant en outre une valeur de contrôle initiale du fichier cible pour le serveur d'applications (12) pour déterminer au préalable si le fichier cible est le même que le fichier existant qui a été enregistré par le serveur de fichiers (13).

8. Client (11) selon la revendication 6, si l'instruction d'exécution est une instruction de fin, l'unité de réception d'instructions (113) transmettant l'instruction de fin à l'unité de téléchargement de fichiers (112), et l'unité de téléchargement de fichiers (112) étant en outre configurée pour achever, selon l'instruction de fin, le téléchargement du fichier cible.

9. Client (11) selon la revendication 6, si l'unité de réception d'instructions reçoit en outre une instruction de partage du serveur d'applications (12), l'unité de réception d'instructions (113) transmettant en outre l'instruction de partage à l'unité de téléchargement de fichiers (112), et l'unité de téléchargement de fichiers (112) étant en outre configurée pour acquérir l'instruction de partage à partir de l'unité de réception d'instructions (113), partager le fichier existant selon l'instruction de partage et achever le téléchargement du fichier cible.

10. Client (11) selon la revendication 6, si l'unité de réception d'instructions (113) reçoit en outre l'instruction de téléchargement du serveur d'applications (12), l'unité de réception d'instructions (113) transmettant en outre l'instruction de téléchargement à l'unité de téléchargement de fichiers (112) et l'unité de téléchargement de fichiers (112) étant en outre configurée pour acquérir l'instruction de téléchargement de l'unité de réception d'instructions (113) et télécharger le fichier cible sur le serveur de fichiers (13) selon l'instruction de téléchargement.
